# EUROPEAN PATENT SPECIFICATION

(11) **EP 2 695 783 B1**
(45) Date of publication and mention of the grant of the patent: **25.02.2015**
(21) Application number: 12195028.1
(22) Date of filing: 30.11.2012
(51) Int. Cl.: B60W 10/02, B60W 10/06, F16H 61/04

(54) **Automatic transmission apparatus and straddle-type vehicle equipped with the apparatus**
Automatische Übertragungsvorrichtung und Sattelfahrzeug mit der Vorrichtung
Appareil de transmission automatique et véhicule de type à selle équipé de l'appareil

(30) Priority: 10.08.2012 JP 2012178444
(43) Date of publication of application: 12.02.2014
(73) Proprietor: Yamaha Hatsudoki Kabushiki Kaisha, Shizuoka-ken Shizuoka 438-8501 (JP)
(72) Inventor: Fujita, Takashi, Shizuoka-ken, Shizuoka 438-8501 (JP)
(74) Representative: Zimmermann, Tankred Klaus

(56) References cited:
- EP-A2- 1 669 627
- EP-A2- 2 149 488
- US-A1- 2007 243 973
- US-A1- 2011 190 996

## Description

### TECHNICAL FIELD

The present invention relates to an automatic transmission apparatus having an electric throttle valve, a clutch actuator, and a shift actuator. The invention also relates to a straddle-type vehicle equipped with the automatic transmission apparatus.

### BACKGROUND ART

Automatic transmission apparatuses equipped with a clutch, a clutch actuator for driving the clutch, a dog clutch-type transmission mechanism, and a shift actuator for driving the transmission mechanism are conventionally known. For example, Japanese Unexamined Patent Application Publication JP 2006-170225 A (EP1669627A) discloses a motorcycle equipped with such an automatic transmission apparatus.

### SUMMARY OF INVENTION

It is an object of the present invention to prevent the gear shifting shock resulting from a fault of the clutch actuator and to prevent the riding feel from being impaired in an automatic transmission apparatus having an electric throttle valve, a clutch actuator, and a shift actuator.

This object is achieved by an automatic transmission apparatus according to claim 1.

The above-described automatic transmission apparatus carries out gear-shifting in the following manner. First, when the rider turns on a shift-up switch or a shift-down switch, the clutch actuator is actuated, and disengagement of the clutch is started. When a predetermined time (shift operation delay time) has elapsed since the disengagement of the clutch has been started, the shift actuator is actuated, and changing of a gear position of the transmission mechanism is started. When the disengagement of the clutch is completed and the changing of the gear position of the transmission mechanism is also completed, the clutch actuator is actuated in the opposite direction, so that the clutch is engaged.

When the clutch is disengaged, the motorcycle runs without the mechanical power of the engine being transmitted to the driving wheel. This may cause rider discomfort easily. Hereinafter, the riding feel that is perceived by the rider when mechanical power of the engine is not transmitted to the driving wheel is referred to as "idle running feeling." The straddle-type vehicle tends to cause the rider to feel the idle running feeling more easily than the automobile. In the automatic transmission apparatus disclosed in the above-mentioned publication, the shift actuator starts actuation before disengagement of the clutch is completed. This serves to shorten the time during which the clutch is disengaged and accordingly shorten the time during which the rider feels the idle running feeling.

Motorcycles equipped with a throttle valve driven by a motor (hereinafter referred to as an "electric throttle valve") are known. In a motorcycle equipped with the electric throttle valve as well as the clutch actuator and the shift actuator, the gear shifting with the shift actuator can be assisted by automatically controlling the electric throttle valve at the time of gear-shifting. More specifically, at the time of upshifting, a control process of temperately decreasing and then increasing the opening of the electric throttle valve is executed so that the changing of the gear position of the transmission mechanism by the shift actuator can be assisted.

However, by executing the control process for the electric throttle valve as described above, gear-shifting may be executed even when the clutch actuator does not operate properly. Specifically, when the clutch actuator is inoperable at the time of gear-shifting, the clutch remains engaged. However, in the case of upshifting, a control process such as to temporarily reduce the opening of the electric throttle valve is executed, so the engagement of the dog clutch of the transmission mechanism tends to be easily released. What is called dog disengagement can be easily done. For this reason, even when the clutch remains engaged, the gear position of the transmission mechanism can be changed in some cases since the shift actuator is actuated. In this way, even when the clutch actuator does not operate properly, gear-shifting is performed in some cases.

However, when the clutch actuator is inoperable, shock at the time of gear-shifting (hereinafter referred to as "gear shifting shock") becomes greater, so a problem arises that the riding feel is impaired. In particular, since straddle-type vehicles are lighter in weight than automobiles, the gear shifting shock tends to be more significant when the gear-shifting as described above takes place in a straddle-type vehicle.

The present inventor has considered stopping the operation of the shift actuator when an abnormality arises in the clutch actuator in order to prevent the riding feel from being impaired. Accordingly, the inventor has considered a method for detecting an abnormality in the clutch actuator by detecting the position of the clutch at a time after a sufficient time is supposed to have elapsed since clutch disengagement has been completed after sending an actuation signal to the clutch actuator and determining whether or not the detected position matches the disengagement completion position. However, in an automatic transmission apparatus in which the clutch actuator and the shift actuator operate together in an interconnected manner so that idle running feeling does not last long, the actuation of the shift actuator is started immediately when a predetermined time (equivalent to the shift operation delay time T in the above-mentioned publication) has elapsed since a signal was sent to the clutch actuator. Thus, it has been found that the just-described method may not be able to prevent the impairing of riding feel resulting from the gear shifting shock because stopping of the actuation of the shift actuator cannot take place in time even if an abnormality in the clutch actuator can be detected. Based on such findings, the present inventor has accomplished the invention as follows.

An automatic transmission apparatus according to the present invention is an automatic transmission apparatus for a straddle-type vehicle having an engine, a driving wheel, and a power transmission mechanism for transmitting mechanical power of the engine to the driving wheel. The automatic transmission apparatus comprises: an electric throttle valve provided in an air-intake passage of the engine; a clutch, provided in the power transmission mechanism, for transmitting and interrupting the mechanical power of the engine; a clutch actuator for driving the clutch; a multi-geared type transmission mechanism, disposed between the clutch in the power transmission mechanism and the driving wheel, and having a dog clutch; a shift actuator for driving the transmission mechanism; and a control device for controlling the electric throttle valve so as to increase or decrease an opening of the electric throttle valve in gear-shifting, and controlling the clutch actuator and the shift actuator so as to cause disengagement of the clutch, changing of a gear position of the transmission mechanism, and engagement of the clutch. The control device comprises: a clutch signal supplying unit for supplying an actuation signal to the clutch actuator; a clutch position detecting unit for detecting a position of the clutch; a shift signal supplying unit for supplying an actuation signal to the shift actuator at or after a time at which a predetermined time has elapsed since the clutch signal supplying unit has supplied the actuation signal; a determining unit for acquiring, from the clutch position detecting unit, a position of the clutch at the time at which the predetermined time has elapsed since the clutch signal supplying unit has supplied the actuation signal, and determining whether or not the position of the clutch is equal to or less than a threshold value; and a shift signal prohibiting unit for prohibiting the shift signal supplying unit from supplying the actuation signal if the determining unit determines that the position of the clutch is equal to or less than the threshold value at the time the predetermined time has elapsed.

With this configuration, it can be determined that an abnormality has occurred in a system including the clutch actuator, the clutch, and the signal lines between the clutch actuator and the clutch (hereinafter referred to as a "clutch system") if the position of the clutch is equal to or less than the threshold value at the time at which the predetermined time has elapsed since an actuation signal has been supplied to the clutch actuator even though the clutch signal supplying unit has supplied the actuation signal to the clutch actuator. The time at which the predetermined time has elapsed is either at the time at which the actuation signal is supplied to the shift actuator or before the time at which the actuation signal is supplied to the shift actuator. Therefore, the abnormality can be judged before the actuation of the shift actuator. This makes it possible to prohibit the actuation of the shift actuator before the actuation of the shift actuator. As a result, there is no risk of changing the gear position of the transmission mechanism with the clutch remaining engaged. Thus, it is possible to prevent the impairing of riding feel resulting from the gear shifting shock, which is caused by the changing of the gear position of the transmission mechanism with the clutch remaining engaged.

In an embodiment of the invention, the predetermined time is set to be a shorter time than a time from when the clutch signal supplying unit supplies the actuation signal to when the disengagement of the clutch is completed.

This enables the determining unit to determine an abnormality of the clutch system before the disengagement of the clutch is completed. As a result, an abnormality of the clutch system can be determined more quickly, and the actuation of the shift actuator can be prohibited within a short time.

In another embodiment of the invention, the automatic transmission apparatus further comprises an abnormality determining device for determining an abnormality of the clutch actuator after the time at which the predetermined time has elapsed since the clutch signal supplying unit has supplied the actuation signal.

In this way, the determining of prohibiting the actuation of the shift actuator is executed separately from the determining of an abnormality of the clutch actuator, and also the determining of prohibiting the actuation of the shift actuator is executed before the determining of an abnormality of the clutch actuator. Therefore, the actuation of the shift actuator can be prohibited within a short time. Moreover, since the determining of an abnormality of the clutch actuator is conducted after the predetermined time has elapsed, sufficient time is ensured for the determining of the abnormality. Therefore, the accuracy of the determining of an abnormality of the clutch actuator is improved. As a result, both improvement in riding feel and accurate determining of an abnormality of the clutch actuator can be achieved at the same time.

In another embodiment of the invention, the automatic transmission apparatus further comprises an alarm device for providing an alarm if the abnormality determining device determines that the clutch actuator has an abnormality.

This allows the rider to easily know that an abnormality has occurred in the clutch system. Therefore, the rider can easily take an action after the abnormality of the clutch system has occurred.

In another embodiment of the invention, the shift signal supplying unit is configured to supply the actuation signal to the shift actuator after the time at which the predetermined time has elapsed since the clutch signal supplying unit has supplied the actuation signal and before the disengagement of the clutch is completed.

With this configuration, the actuation signal can be supplied to the shift actuator before the disengagement of the clutch is completed. Therefore, it becomes possible to change the gear position of the transmission mechanism more quickly. As a result, the rider's idle running feeling can be reduced. In addition, the determining of an abnormality of the clutch system is executed before the actuation signal is supplied to the shift actuator. As a result, when an abnormality of the clutch system occurs, the actuation of the shift actuator can be prohibited within a short time.

In another embodiment of the invention, the shift signal supplying unit is configured to supply the actuation signal to the shift actuator at the time at which the predetermined time has elapsed since the clutch signal supplying unit has supplied the actuation signal.

When the determining an abnormality of the clutch system and the starting of the supply of the actuation signal to the shift actuator are executed at the same time in this way, the time required for determining an abnormality of the clutch system can be ensured to the maximum. As a result, the accuracy of the determining of an abnormality in the clutch actuator can be improved.

In another preferable embodiment of the invention, a straddle-type vehicle equipped with an automatic transmission apparatus having the structure as described above is provided.

As a result, it is made possible to provide a straddle-type vehicle equipped with an automatic transmission apparatus that can prevent the gear shifting shock resulting from a fault of the clutch actuator and prevent the riding feel from being impaired.

### ADVANTAGEOUS EFFECTS OF INVENTION

The present invention makes it possible to prevent the gear shifting shock resulting from a fault of the clutch actuator and to prevent the riding feel from being impaired in an automatic transmission apparatus having an electric throttle valve, a clutch actuator, and a shift actuator.

### BRIEF DESCRIPTION OF DRAWINGS

Fig. 1 is a side view illustrating a motorcycle according to one embodiment.
Fig. 2 is a configuration diagram illustrating a drive system of the motorcycle shown in Fig. 1.
Fig. 3 is a block diagram illustrating main elements of the motorcycle according to the embodiment.
Fig. 4 is a flow chart illustrating the control process of an automatic transmission apparatus according to the embodiment.
Fig. 5 is a chart illustrating changes over time of the clutch position, the shift drum rotational position, and the position of the transmission gear when an abnormality occurs in the clutch system of the automatic transmission apparatus according to the embodiment.
Fig. 6 is a chart illustrating changes over time of the clutch position, the shift drum rotational position, and the position of the transmission gear when the clutch system is normal in the automatic transmission apparatus according to the embodiment.
Fig. 7 is a view illustrating an alarm device according to the embodiment.

### DESCRIPTION OF EMBODIMENTS

Hereinbelow, preferred embodiments of the present invention will be described. It should be noted that the other matters not specifically mentioned in this description but necessary to implement the invention can be understood as design variations by a skilled person based on the prior art in the technical field. The present invention may be implemented based on the content disclosed herein and the common technical knowledge in the field.

### <FIRST EMBODIMENT>

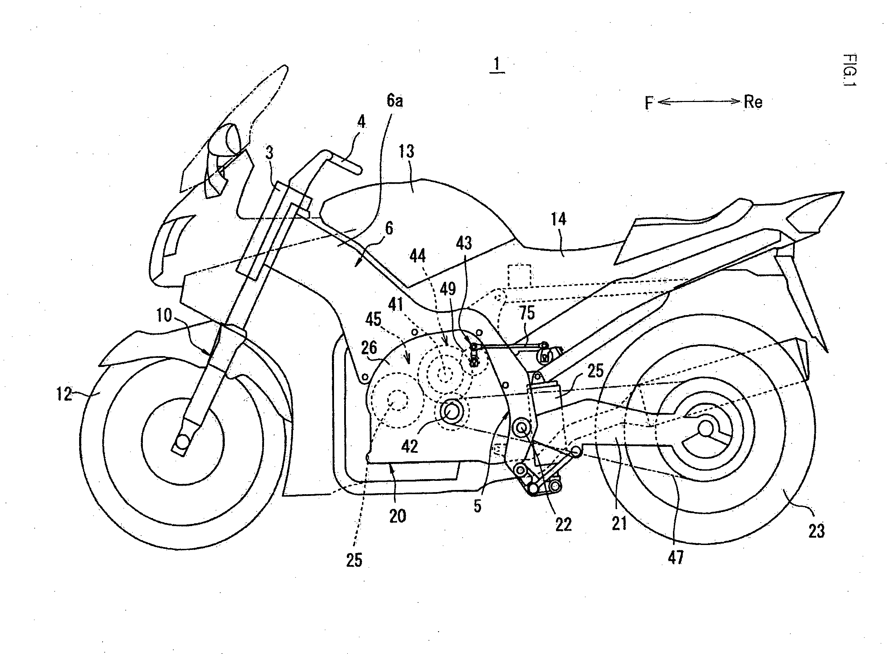

Hereinbelow, a motorcycle equipped with an automatic transmission apparatus according to the present invention will be described with reference to the drawings. Fig. 1 is a side view illustrating a motorcycle 1. In the present description, the terms "front," "rear," "left," and "right" respectively refer to front, rear, left, and right as defined based on the perspective of the rider seated on a later-described seat 14. Reference characters F and Re in the drawings indicate front and rear, respectively.

The motorcycle 1 is one example of the straddle-type vehicle according to the present embodiment. The motorcycle 1 is what is called an on-road type motorcycle. For example, the straddle-type vehicle according to the present invention may be any type of motorcycle including an off-road type motorcycle, a sport bike type motorcycle, a scooter type motorcycle, and a moped type motorcycle. The straddle-type vehicle according to the present invention is not limited to the motorcycle 1. For example, the straddle-type vehicle according to the present invention may be an ATV, a four-wheeled all-terrain vehicle, a snowmobile, and the like.

As illustrated in Fig. 1, the motorcycle 1 has a head pipe 3 and a body frame 6. The body frame 6 has a pair of left and right frame unit 6a extending rearward the head pipe 3. In Fig. 1, only of the frame portions, the frame portion 6a, is depicted. A rear portion of the frame portion 6a extends downward. A rear-arm bracket 5 is connected to a rear portion of the frame portion 6a. A front end portion of a rear arm 21 is connected to the rear-arm bracket 5 via a pivot shaft 22. The rear arm 21 is supported vertically swingably by the pivot shaft 22. A rear wheel 23 is supported at a rear end portion of the rear arm 21.

A fuel tank 13 is disposed above the frame portion 6a. A seat 14 for the rider to be seated is disposed at the rear of the fuel tank 13.

A front fork 10 is supported rotatably by the head pipe 3. A handle bar 4 is provided at the upper end of the front fork 10. A front wheel 12 is provided rotatably at a lower end of the front fork 10. A power unit 20 is mounted on the frame portion 6a and the rear-arm bracket 5 in a suspended manner.

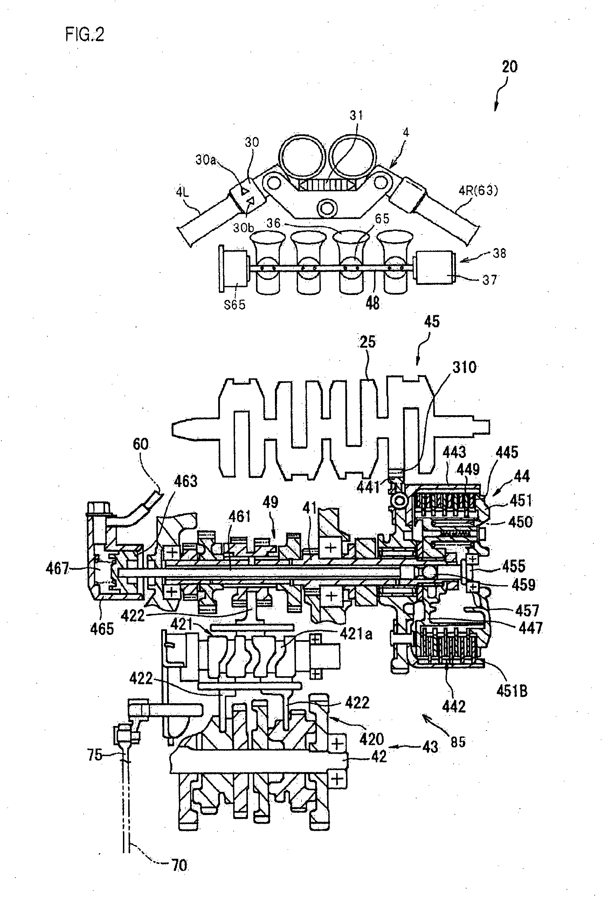

Fig. 2 is a configuration diagram illustrating a drive system of the motorcycle 1 shown in Fig. 1. A right grip 4R of the handlebar 4 constitutes an accelerator 63. A shift switch 30 is provided on a left grip 4L side of the handlebar 4. The shift switch 30 comprises a shift-up switch 30a and a shift-down switch 30b. The shift switch 30 can increase or decrease the shift position from between neutral and the top gear position (for example, the 6-th gear position) by manual operation. An indicator 31 for visually indicating the current shift position or the like is provided at a center portion of the handlebar 4.

A throttle valve 65 is fitted to a throttle 36, which forms an intake passage. A throttle drive actuator 37 is provided at the right end of a valve shaft 48 of the throttle valve 65. In the present embodiment, the throttle drive actuator 37 is an electric motor. However, the throttle drive actuator 37 is not limited to the electric motor. The throttle valve 65 is driven by the throttle drive actuator 37. The throttle valve 65 is an electric-type throttle valve. The throttle valve 65 is configured to be electronically controlled by the throttle drive actuator 37. A throttle opening sensor S65 is provided at the left end of the valve shaft 48 of the throttle valve 65. The throttle drive actuator 37 and the throttle opening sensor S65 constitutes a DBW (drive-by-wire) 38. The DBW 38 is for causing the throttle valve 65 to open and close by the throttle drive actuator 37 according to the detection result by the throttle opening sensor S65.

As illustrated in Fig. 2, the power unit 20 at least includes an engine 45, a clutch 44, and a transmission mechanism 43. The engine 45, the clutch 44, and the transmission mechanism 43 are assembled integrally to a crankcase 26 (see Fig. 1).

The engine 45 according to the present embodiment is an internal combustion engine that uses gasoline as the fuel. However, the engine 45 is not limited to the internal combustion engine such as a gasoline engine. The engine 45 may be an electric motor engine or the like. The engine 45 may also be one in which a gasoline engine and an electric motor engine are combined. The engine 45 has a crankshaft 25.

A power transmission mechanism 85 in the present embodiment is a mechanism for transmitting the torque of the engine 45 to the rear wheel 23, which is a driving wheel. The power transmission mechanism 85 includes the clutch 44, a main shaft 41, a drive shaft 42, and the transmission mechanism 43.

The crankshaft 25 outputs the torque of the engine 45. The power unit 20 has the main shaft 41 and the drive shaft 42. The crankshaft 25 is coupled to a main shaft 41 via the clutch 44. The main shaft 41 is arranged parallel to the crankshaft 25. The main shaft 41 is also arranged parallel to a drive shaft 42.

The clutch 44 in the present embodiment is, for example, a multiple friction plate clutch. The clutch 44 has a clutch housing 443 and a clutch boss 447. A plurality of friction plates 445 are provided in the clutch housing 443. A plurality of clutch plates 449 are provided outside the clutch boss 447. Each of the friction plates 445 rotates together with the clutch housing 443. On the other hand, each of the friction plates 445 is displaceable with respect to the axial direction of the main shaft 41. The friction plates 445 are arrayed along the axial direction of the main shaft 41.

Each of the clutch plates 449 faces an adjacent one of the friction plates 445. Each of the clutch plates 449 rotates together with the clutch boss 447. Each of the clutch plates 449 is displaceable with respect to the axial direction of the main shaft 41. In the present embodiment, the plurality of friction plates 445 and the plurality of clutch plates 449 make up a plate assembly 442.

As illustrated in Fig. 2, a pressure plate 451 is disposed vehicle-widthwise outward of the main shaft 41 (i.e., on the right in Fig. 2). The pressure plate 451 is formed in a substantially disc shape. A pressing part 451B projecting toward the plate assembly 442 side is formed in a radially outward portion of the pressure plate 451. The pressing part 451B faces the friction plate 445 that is located on the rightmost side of the plate assembly 442.

The clutch 44 is provided with a spring 450. The spring 450 urges the pressure plate 451 vehicle-widthwise inwardly (i.e., leftward in Fig. 2). In other words, the spring 450 urges the pressure plate 451 in a direction in which the pressing part 451B presses the plate assembly 442.

A center portion of the pressure plate 451 is engaged with one end portion (the right end portion in Fig. 2) of a push rod 455 via a bearing 457. This allows the pressure plate 451 to be rotatable relative to the push rod 455. Note that the main shaft 41 has a tubular shape. The other end portion (the left end portion) of the push rod 455 is accommodated inside the main shaft 41. Inside the main shaft 41, a spherical ball 459 is provided adjacent to the other end portion (the left end portion) of the push rod 455. Further inside the main shaft 41, a push rod 461 is provided adjacently to the ball 459.

A left end portion of the push rod 461 protrudes from the main shaft 41. A piston 463 is provided integrally with the left end portion of the push rod 461. The piston 463 is guided by the cylinder main body 465, and it is slidable in the axial directions of the main shaft 41.

The clutch 44 is driven by a clutch actuator 60. In the present embodiment, the clutch actuator 60 is an electric motor, but the clutch actuator 60 is not limited to the electric motor. The clutch actuator 60 drives the clutch 44 so that the clutch 44 can be engaged and disengaged. When the clutch actuator 60 is actuated, lubrication oil is supplied into a space 467 surrounded by the piston 463 and the cylinder main body 465. When lubrication oil is supplied into the space 467, the piston 463 is pushed and shifted rightward in Fig. 2. Thereby, the piston 463 pushes the pressure plate 451 rightward in Fig. 2, via the push rod 461, the ball 459, the push rod 455, and the bearing 457. When the pressure plate 451 is pushed rightward in Fig. 2, the pressing part 451B of the pressure plate 451 is separated from the friction plates 445, and the clutch 44 is brought into a disengaged state.

At the time when the clutch 44 is engaged, the pressure plate 451 is moved leftward in Fig. 2 by the spring 450. When the pressure plate 451 moves leftward in Fig. 2, the pressing part 451B presses the plate assembly 442 leftward. As a result, the friction plates 445 and the clutch plates 449 in the plate assembly 442 are brought into pressure contact with each other. Thereby, the clutch 44 is brought into an engaged state.

On the other hand, in the disengaged state of the clutch 44, the pressure plate 451 is moved rightward in Fig. 2 by the push rod 451. Then, the pressing part 451B of the pressure plate 451 is separated from the plate assembly 442. In the state in which the pressing part 451B is separated from the plate assembly 442, the friction plates 445 and the clutch plates 449 are not in pressure contact with each other. A slight clearance is formed between each of the friction plates 445 and each of the clutch plates 449. Therefore, a friction force that can transmit a drive force does not occur between the friction plates 445 and the clutch plates 449.

Thus, the pressure plate 451 moves in one of the axial directions of the main shaft 41 or in the other direction according to the magnitude relationship between the drive force of the clutch actuator 60 and the urging force of the spring 450. According to the just-described movement, the clutch 44 is brought into an engaged state or a disengaged state.

A gear 310 is supported integrally on the crankshaft 25 of the engine 45. A gear 441 that meshes with the gear 310 is supported on the main shaft 41. The gear 441 is rotatable relative to the main shaft 41. The gear 441 is provided integrally with, for example, the clutch housing 443. As a result, the torque of the engine 45 is transmitted from the crankshaft 25 via the gear 441 to the clutch housing 443. Also, the torque of the engine 45 is transmitted the clutch housing 443 to the clutch boss 447 by the friction force produced between the plurality of friction plates 445 and the plurality of clutch plates 449. The clutch boss 447 and the main shaft 41 rotate integrally with each other. This means that there is no relative rotation between the clutch boss 447 and the main shaft 41. Therefore, when the clutch 44 is engaged, the torque of the engine 45 is transmitted to the main shaft 41.

The push rod 455 is not limited to such a push rod that pushes the pressure plate 451 rightward in Fig. 2 by a mechanism inserted in the main shaft 41. The push rod 455 may be such a push rod that pulls the pressure plate 451 rightward in Fig. 2 by a mechanism provided vehicle-widthwise outward (i.e., rightward in Fig. 2) of the pressure plate 451.

The clutch 44 may not be a multiple plate clutch but may be a single plate clutch. The clutch 44 may also be provided with a centrifugal weight. In this case, the clutch 44 is engaged/disengaged by actuation of the clutch actuator 60 and the centrifugal force of the centrifugal weight.

Next, the configuration of the transmission mechanism 43 will be described in detail. The transmission mechanism 43 according to the present embodiment is what is called a dog clutch type transmission mechanism, and a multi-speed type transmission mechanism. The transmission mechanism 43 is disposed on a power transmission path for transmitting the mechanical power of the engine 45 to the rear wheel 23 (see Fig. 1). The transmission mechanism 43 is disposed between the friction plates 445 of the clutch 44 and the rear wheel 23. The transmission mechanism 43 has later-described transmission gears 49 and 420, a shift drum 421, a shift fork 422, a shift actuator 70, and so forth.

A plurality of transmission gears 49 are attached to the main shaft 41. On the other hand, a plurality of transmission gears 420 that correspond to the above-mentioned plurality of transmission gears 49 are attached to the drive shaft 42. Each of the transmission gears 49 and each of the transmission gears 420 have an engaging portion comprising a protrusion protruding in an axial direction of the main shaft 41 or a recess recessed in an axial direction of the main shaft 41. Of the plurality of transmission gears 49 and the plurality of transmission gears 420, only selected one or more of the transmission gears 49 and 420 are engaged with each other. The engaging portions of the transmission gears 49 and the transmission gears 420 overlap with each other with respect to the axial direction of the main shaft 41, whereby the transmission gears 49 and the transmission gears 420 are engaged with each other. At least one of the transmission gears 49 other than the selected one of the transmission gears 49 and the transmission gears 420 other than the selected one of the transmission gears 420 is allowed to be rotatable relative to the main shaft 41 or the drive shaft 42. In other words, at least one of the non-selected transmission gears 49 and the non-selected transmission gears 420 is allowed to spin freely relative to the main shaft 41 or the drive shaft 42. The transmission of rotation between the main shaft 41 and the drive shaft 42 is carried out only through the selected transmission gear 49 and the selected transmission gear 420 that mesh with each other.

The selection of the transmission gear 49 and the transmission gear 420 is performed by the shift drum 421. According to the rotation of the shift drum 421, the combination of the transmission gears 49 and 420 that engage with each other is changed. A plurality of cam grooves 421a are formed in the outer circumferential surface of the shift drum 421. A shift fork 422 is fitted to each of the cam grooves 421a. Each shift fork 422 engages with a predetermined transmission gear 49 of the main shaft 41 and a predetermined transmission gear 420 of the drive shaft 42. In response to rotation of the shift drum 421, each of the plurality of the shift forks 422 is guided by the cam grooves 421a to moves in an axial direction of the main shaft 41. Thereby, of the transmission gears 49 and 420, the gears to be engaged with each other are selected. More specifically, of the plurality of transmission gears 49 and the plurality of transmission gears 420, only the pair of gears that is located at the position corresponding to the rotation angle of the shift drum 421 is brought into a fixed state relative to the main shaft 41 and the drive shaft 42 by a spline. Thereby, the gear position in the transmission mechanism 43 is determined. As a result, the transmission of rotation is carried out between the main shaft 41 and the drive shaft 42 through the transmission gear 49 and the transmission gear 420 at a predetermined transmission gear ratio. The shift drum 421 is rotated only by a predetermined angle by a shift rod 75 moving back and forth.

Switching of the transmission gears of the transmission mechanism 43, in other words, change of the gear position of the transmission mechanism 43, is performed by the shift actuator 70. In the present embodiment, the shift actuator 70 is an electric motor. However, the shift actuator 70 is not limited to the electric motor. In the present embodiment, the shift actuator 70 is connected to the shift drum 421 via the shift rod 75. However, the shift actuator 70 may be connected directly to the shift drum 421. The shift actuator 70 changes the combination of the transmission gears 49 and 420 that engage with each other by rotating the shift drum 421. The shift rod 75 is driven by the shift actuator 70 to thereby move back and forth.

With such a configuration as described above, when the engine 45 is operated under the condition in which a predetermined pair of transmission gear 49 and transmission gear 420 are fixed respectively to the main shaft 41 and the drive shaft 42 and the clutch 44 is brought into an engaged state, the torque of the engine 45 is transmitted to the main shaft 41 via the clutch 44. Also, the transmission of rotation is carried out at a predetermined transmission gear ratio between the main shaft 41 and the drive shaft 42 via the predetermined pair of transmission gear 49 and transmission gear 420, so that the drive shaft 42 is rotated. When the drive shaft 42 is rotated, the torque is transmitted by a power transmission mechanism 47 (see Fig. 1) that connects the drive shaft 42 to a rear wheel 23 (see Fig. 1), so that the rear wheel 23 is rotated.

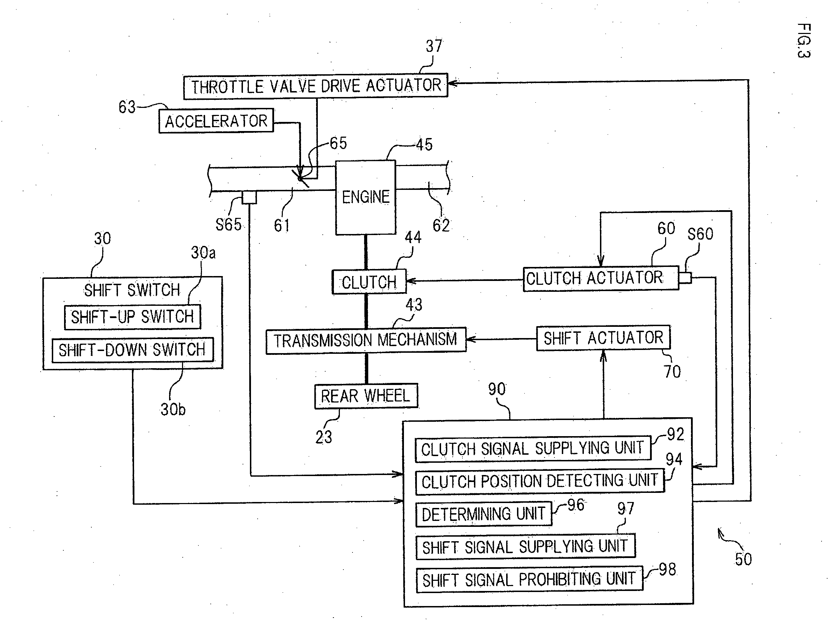

Fig. 3 is a block diagram showing main elements of the motorcycle 1. As illustrated in Fig. 3, the motorcycle 1 has the engine 45, the clutch 44, and the transmission mechanism 43. An intake passage 61 and an exhaust passage 62 are connected to the engine 45. A throttle valve 65 is disposed in the intake passage 61. The throttle valve 65 adjusts the amount and speed of the air flowing through the intake passage 61.

Next, an automatic transmission apparatus 50 according to the present embodiment will be described below. As illustrated in Fig. 3, the automatic transmission apparatus 50 according to the present embodiment has the clutch 44, the transmission mechanism 43, the throttle valve 65, the clutch actuator 60, the shift actuator 70, and the throttle drive actuator 37. The automatic transmission apparatus 50 also has an ECU (Electric Control Unit) 90 as a control device for controlling the clutch actuator 60, the shift actuator 70, and the throttle drive actuator 37. The ECU 90 controls the engine 45, in addition to the clutch actuator 60, the shift actuator 70, and the throttle drive actuator 37.

The automatic transmission apparatus 50 has a clutch actuator sensor S60 for detecting the driving amount of the clutch actuator 60. In the present embodiment, the clutch actuator 60 is made up of an electric motor. The clutch actuator sensor S60 is configured to detect the rotation angle of the clutch actuator 60, which is an electric motor. For example, a potentiometer can be used suitably for the clutch actuator sensor S60.

The throttle valve 65 in the present embodiment is an electric-type throttle valve. In the motorcycle 1 as in the present embodiment, which has the clutch actuator 60, the shift actuator 70, and the electric-type throttle valve 65, the ECU 90 controls the throttle valve 65 automatically to assist the changing of the gear position in gear-shifting, in other words, when changing the gear position of the transmission mechanism 43 by driving the shift actuator 70. For example, at the time of upshifting the torque of the engine 45 is reduced by closing the opening of the throttle valve 65. With this control process, the changing of the gear position of the transmission mechanism 43 by the shift actuator 70 can be assisted.

However, by executing the control process for the electric-type throttle valve 65, an abnormality may occur in the clutch system, such as in the clutch actuator 60, so the gear position of the transmission mechanism 43 can be changed in some cases even with the position of the clutch 44 being engaged. For example, at the time of upshifting, a control process such as to close the opening of the electric throttle valve 65 is executed, so the engagement of the dog clutch of the transmission mechanism 43 tends to be easily released. For this reason, even when the clutch 44 remains engaged, the gear position of the transmission mechanism 43 can be changed in some cases since the shift actuator 70 is actuated. At this moment, the gear shifting shock becomes great, impairing riding feel for the rider. It is because of the electric-type throttle valve 65 that such impairing of riding feel, which results from the change of the gear position of the transmission mechanism 43 with the clutch 44 remaining engaged, can occur. For this reason, the automatic transmission apparatus 50 according to the present embodiment executes a control process as described below.

The ECU 90 has a clutch signal supplying unit 92 for supplying an actuation signal to the clutch actuator 60, a clutch position detecting unit 94 for detecting a position of the clutch 44, a shift signal supplying unit 97 for supplying an actuation signal to the shift actuator 70, a determining unit 96 for determining the position of the clutch 44, and a shift signal prohibiting unit 98 for prohibiting the shift signal supplying unit 97 from supplying the actuation signal.

The ECU 90 is connected to the shift switch 30, the throttle opening sensor S65, and the clutch actuator sensor S60. The ECU 90 receives signals from the shift switch 30, the throttle opening sensor S65, and the clutch actuator sensor S60. The ECU 90 is also connected to the clutch actuator 60, the shift actuator 70, and the throttle drive actuator 37. The ECU 90 outputs control signals to the clutch actuator 60, the shift actuator 70, and the throttle drive actuator 37.

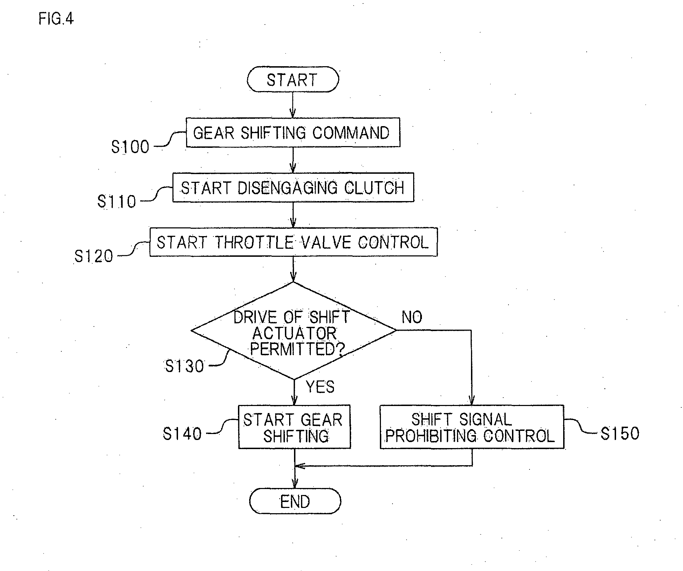

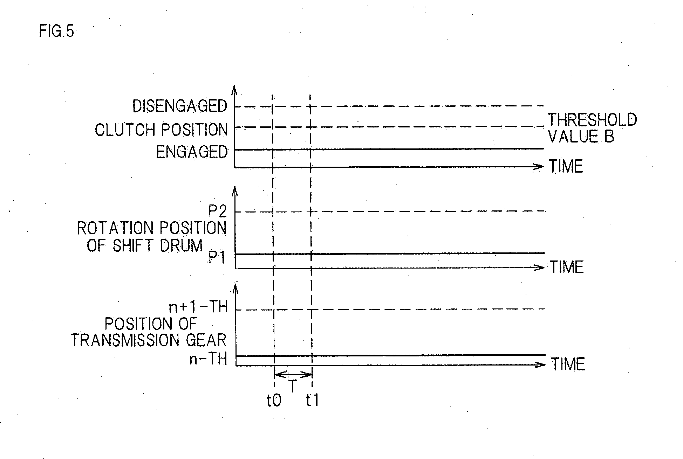

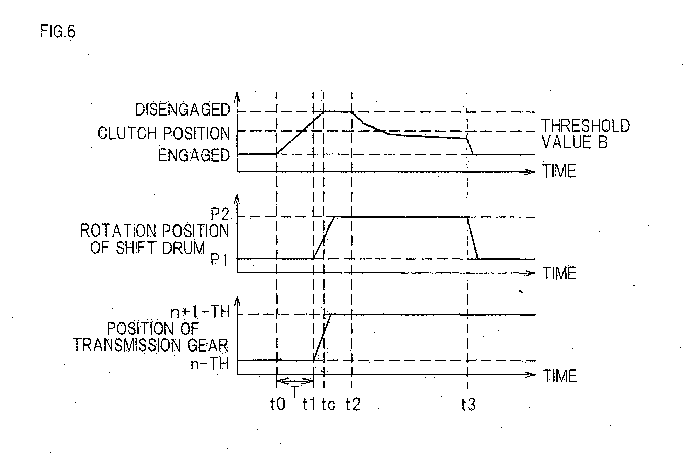

Next, the control process of the automatic transmission apparatus 50 according to the present embodiment will be described with reference to Figs. 4 through 6. Fig. 4 is a flow chart illustrating the control process of the automatic transmission apparatus 50 according to the present embodiment. Fig. 5 is a chart illustrating changes over time of the clutch position, the shift drum rotational position, and the position of the transmission gear when an abnormality occurs in the clutch system of the automatic transmission apparatus 50 according to the present embodiment. Fig. 6 is a chart illustrating changes over time of the clutch position, the shift drum rotational position, and the position of the transmission gear when the clutch system is normal in the automatic transmission apparatus 50 according to the present embodiment. It should be noted that the clutch system refers to a system including the clutch actuator 60, the clutch 44, and the signal lines between the clutch actuator 60 and the clutch 44. The clutch position refers to the position of the clutch 44. The shift drum rotational position refers to the rotational position of the shift drum 421.

As illustrated in Fig. 4, first, at step S100, the rider presses the shift-up switch 30a (see Fig. 2) or the shift-down switch 30b (see Fig. 2), and thereby the ECU 90 receives a gear shifting command signal. Referring to Figs. 5 and 6, the ECU 90 receives the gear shifting command at time t0. In the present embodiment, a control process for upshifting when the rider presses the shift-up switch 30a will be described. A similar control process is executed for the control process for downshifting when the rider presses the shift-down switch 30b.

Referring to Fig 4, after receiving the gear shifting command, the ECU 90 starts disengagement of the clutch 44 at step 110. The clutch signal supplying unit 92 of the ECU 90 supplies an actuation signal to the clutch actuator 60. Having been supplied with the actuation signal, the clutch actuator 60 starts disengagement of the clutch 44. Referring to Figs. 5 and 6, at time t0, the ECU 90 drives the clutch actuator 60 to start disengagement of the clutch 44, at the same time as or after receiving the gear shifting command at time t0. However, referring to Fig 5, at time t0, the clutch actuator 60 is not actually operated, or the disengagement of the clutch 44 is not properly started even when the clutch actuator 60 is operated, because the clutch actuator 60 has an abnormality.

Next, at step S 120 in Fig. 4, the ECU 90 starts a control process for the throttle valve 65. More specifically, in the present embodiment, the ECU 90 controls the throttle drive actuator 37 so as to reduce the opening of the throttle valve 65 for the control process of upshifting. In response to the result of the detection by the throttle opening sensor S65, the ECU 90 executes a control process of reducing the opening of the throttle valve 65 by the throttle drive actuator 37. By reducing the opening of the throttle valve 65, the torque of the engine 45 is accordingly reduced. Therefore, the later-described changing of the gear position of the transmission mechanism 43 can be done easily. In the case of the control process for downshifting, the ECU 90 controls the throttle drive actuator 37 so as to increase the opening of the throttle valve 65. The starting of the control process for the throttle valve 65 at step S120 may be performed at the same time as the process of step S110. The starting of the control process for the throttle valve 65 at step S120 may be performed before the step S110 and at the same time as the reception of the gear shifting command at step S 100. In Figs. 5 and 6, the ECU 90 starts the control process for the throttle valve 65 at time t0.

Referring to Fig. 4, at step S 130, which is after starting the disengagement of the clutch 44 and after starting the control process for the throttle valve 65, the ECU 90 determines whether or not the changing of the gear position of the transmission mechanism 43 may be started. In other words, at step S130, the ECU 90 determines whether or not to drive the shift actuator 70.

At step S 130, first, the ECU 90 detects the position of the clutch 44 using the clutch position detecting unit 94. More specifically, the ECU 90 detects the driving amount of the clutch actuator 60 using the clutch actuator sensor S60. Then, the ECU 90 indirectly detects the position of the clutch 44 from the detect driving amount of the clutch actuator 60. In the present embodiment, the ECU 90 detects the position of the clutch 44 indirectly using the clutch actuator sensor S60. However, the ECU 90 may be configured to directly detect the position of the clutch 44 from the clutch 44.

The control process of step S 130 is started at a time at which a predetermined time has elapsed since the disengagement of the clutch 44 has been started. In other words, the detection of the position of the clutch 44 by the clutch position detecting unit 94 is started at a time at which a predetermined time has elapsed since the clutch signal supplying unit 92 supplies an actuation signal to the clutch actuator 60. The ECU 90 stores in advance a predetermined time from the start of disengagement of the clutch 44 until the detection of the position of the clutch 44. The predetermined time is stored in a memory or the like, which is not shown in the drawings, within the ECU 90. Then, the ECU 90 executes the control process of step S130 at the time when the predetermined time has elapsed since the start of disengagement of the clutch 44. Referring to Figs. 5 and 6, at time t1, the ECU 90 determines whether or not to drive the shift actuator 70. Time T is the predetermined time. It is preferable that the predetermined time T be a shorter time than the time (hereinafter also referred to as "clutch disengaging time") from when the actuation signal is supplied to the clutch actuator 60 by the clutch signal supplying unit 92 to when the disengagement of the clutch 44 is completed. The predetermined time T may be the same duration of time as the clutch disengaging time. The predetermined time T may be longer than the clutch disengaging time. Referring to Fig. 6, an actuation signal is supplied to the clutch actuator 60 by the clutch signal supplying unit 92 at time t0. At time tc, the disengagement of the clutch 44 is completed. The predetermined time T is set to be a time shorter than the time from time t0 to time tc.

After the position of the clutch 44 has been detected by the clutch position detecting unit 94, the ECU 90 determines the position of the clutch 44 using the determining unit 96. In the present embodiment, the ECU 90 determines whether or not there is an abnormality in the clutch system, including the clutch actuator 60, the clutch 44, and so forth, by determining the position of the clutch 44. More specifically, the ECU 90 stores in advance a threshold value of the position of the clutch 44 for determining whether or not to start changing the gear position of the transmission mechanism 43. The threshold value is stored in a memory or the like, which is not shown in the drawings, within the ECU 90. Then, the determining unit 96 of the ECU 90 compares the position of the clutch 44 that has been detected by the clutch position detecting unit 94 with the threshold value. In the present embodiment, if the position of the clutch 44 at the time at which the predetermined time has elapsed since disengagement of the clutch 44 has been started is greater than the threshold value, the ECU 90 determines that the changing of the gear position of the transmission mechanism 43 may be started next, in other words, the actuation of the shift actuator 70 may be started. Referring to Fig. 4, the ECU 90 executes the process of step S140 next. On the other hand, if the position of the clutch 44 at the time at which the predetermined time has elapsed since the disengagement of the clutch 44 has been started is equal to or less than the threshold value, the ECU 90 determines that a shift signal prohibition control process should be executed next. Referring to Fig. 4, the ECU 90 executes the process of step S150 next.

At step S130 in Fig. 4, if it is determined by the determining unit 96 of the ECU 90 that the position of the clutch 44 is greater than the threshold value, the process of step S140 is executed next. At step S140, the ECU 90 changes the gear position of the transmission mechanism 43. The ECU 90 drives the shift actuator 70 so as to start changing the gear position of the transmission mechanism 43 by the shift signal supplying unit 97. The shift signal supplying unit 97 of the ECU 90 supplies an actuation signal to the shift actuator 70. Having been supplied with the actuation signal, the shift actuator 70 causes the shift drum 421 to rotate by the actuation, to thereby change the gear position of the transmission mechanism 43. Note that the shift signal supplying unit 97 supplies an actuation signal to the shift actuator 70 at the time at which the predetermined time has elapsed since the clutch signal supplying unit 92 has supplied the actuation signal to the clutch actuator 60. However, the shift signal supplying unit 97 may supply the actuation signal to the shift actuator 70 after the time at which the predetermined time has elapsed since the clutch signal supplying unit 92 has supplied the actuation signal to the clutch actuator 60 and before the disengagement of the clutch 44 is completed.

Fig. 6 is a chart illustrating changes over time of the clutch position, the shift drum rotational position, and the position of the transmission gears 49 and 420 when the clutch system is normal. Referring to Fig. 6, at time t1, at which the predetermined time T has elapsed since time t0, the ECU 90 detects the position of the clutch 44 using the clutch position detecting unit 94. Then, the determining unit 96 of the ECU 90 determines that changing of the gear position of the transmission mechanism 43 may be started next because the position of the clutch 44 is greater than the threshold value B. Thereafter, the ECU 90 causes the rotational position of the shift drum 421 to move from position P1 to position P2 by driving the shift actuator 70, in order to change the gear position of the transmission mechanism 43. At this time, the position of the transmission gear is changed from the n-th gear to the n+1-th gear.

At step S130 in Fig. 4, if it is determined by the determining unit 96 of the ECU 90 that the position of the clutch 44 is equal to or less than the threshold value, the ECU 90 prohibits supplying of the actuation signal to the shift actuator 70. Accordingly, in the subsequent step S 150, the ECU 90 prohibits the shift signal supplying unit 97 from supplying an actuation signal, by the shift signal prohibiting unit 98. Because the supplying of the actuation signal to the shift actuator 70 is prohibited, neither the rotational position of the shift drum 421 nor the position of the transmission gears 49 and 420 changes. Therefore, changing of the gear position of the transmission mechanism 43 does not take place. In the present embodiment, in the case that the ECU 90 prohibits the supplying of the actuation signal to the shift actuator 70, the ECU 90 does not change the control process for the actuation of the clutch actuator 60. That is, the ECU 90 controls the clutch actuator 60 so as to cause the clutch 44 to move toward the disengagement position. However, if the ECU 90 prohibits the supplying of the actuation signal to the shift actuator 70, the ECU 90 may stop the actuation of the clutch actuator 60. In this case, the ECU 90 stops the clutch actuator 60 by prohibiting the supply of the actuation signal to the clutch actuator 60, to stop moving the clutch 44. Alternatively, in the case that the ECU 90 prohibits the supplying of the actuation signal to the shift actuator 70, the ECU 90 may control the clutch actuator 60 so as to cause the clutch 44 to move toward the engagement position.

Fig. 5 is a chart illustrating changes over time of the clutch position, the shift drum rotational position, and the position of the transmission gears 49 and 420 when an abnormality occurs in the clutch system. Referring to Fig. 5, at time t0, even though the clutch actuator 60 is actuated to start disengagement of the clutch 44, the clutch 44 actually remains engaged because an abnormality has occurred in the clutch system. Then, at time t1, the determining unit 96 of the ECU 90 determines that changing of the gear position of the transmission mechanism 43 should be prohibited because the position of the clutch 44 is equal to or less than the threshold value. Accordingly, at time t1 onward, the shift signal prohibiting unit 98 of the ECU 90 prohibits the shift signal supplying unit 97 from supplying an actuation signal to the shift actuator 70, and therefore, the rotational position of the shift drum 421 and the position of the transmission gears 49 and 420 do not change. Therefore, changing of the gear position of the transmission mechanism 43 does not take place.

It should be noted that the ECU 90 may determine an abnormality of the clutch system using an abnormality determining device for determining an abnormality in the clutch system, which includes the clutch actuator 60, the clutch 44, and so forth, before or after step S140 in Fig. 4 and before or after step S 150 in Fig. 4, that is, after the time at which the predetermined time has elapsed since the clutch signal supplying unit 92 has supplied an actuation signal to the clutch actuator 60. The configuration of the abnormality determining device is not particularly limited. For example, the ECU 90 may be such as to detect the driving amount of the clutch actuator 60 by the clutch actuator sensor S60 and to determine that there is an abnormality in the clutch system if the driving amount of the clutch actuator 60 is an abnormal driving amount (for example, if the driving amount is zero). If it is determined by the abnormality determining device that there is an abnormality in the clutch system, the ECU 90 stops the clutch actuator 60 by prohibiting the supply of the actuation signal to the clutch actuator 60, to stop moving the clutch 44.

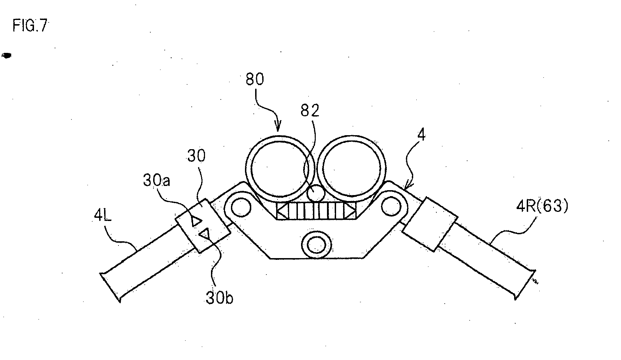

In addition, if it is determined by the abnormality determining device that there is an abnormality in the clutch system, the ECU 90 may issue an alarm to notify the rider that the clutch system has an abnormality. Fig. 7 is a view illustrating an alarm device according to the present embodiment. As illustrated in Fig. 7, an instrument panel 80 is provided in front of and between a right handle bar 4R and a left handlebar 4L of the motorcycle 1. The motorcycle 1 has a clutch abnormality alarm lamp 82 in the instrument panel 80. In the present embodiment, the clutch abnormality alarm lamp 82 constitutes the alarm device. If it is determined by the abnormality determining device that an abnormality has occurred in the clutch system, the ECU 90 notifies the rider of the abnormality of the clutch system by lighting up the clutch abnormality alarm lamp 82. In the present embodiment, the rider is visually notified of the abnormality of the clutch system by lighting up the clutch abnormality alarm lamp 82. However, the notification may be carried out by blinking the clutch abnormality alarm lamp 82. The clutch abnormality alarm lamp 82 is not limited to being provided in the instrument panel 80. The clutch abnormality alarm lamp 82 may be provided outside the instrument panel 80 (for example, at any position the right handle bar 4R and the left handlebar 4L at which the rider can recognize visually). The clutch abnormality alarm lamp 82 may be such as to visually display a message to let the rider know an abnormality of the clutch system. In place of using the clutch abnormality alarm lamp 82, the alarm device may notify the rider auditorily or physically of an abnormality of the clutch system. The alarm device may determine that an abnormality has occurred in the clutch system when the ECU 90 determines that the supplying of an actuation signal to the shift actuator 70 should be prohibited in the determination of whether or not to drive the shift actuator 70 in step S 130 of Fig. 4, or when the ECU 90 executes the shift signal prohibition control process in step S 150 of Fig. 4, and accordingly the alarm device may cause the clutch abnormality alarm lamp 82 to light up.

In Fig. 4, the ECU 90 functions as the clutch signal supplying unit 92 when executing the process of step S110. Also, the ECU 90 functions as the clutch position detecting unit 94 when detecting the position of the clutch 44 in step S 130. The ECU 90 functions as the determining unit 96 when executing the determining of the position of the clutch 44 in step S130. The ECU 90 functions the shift signal supplying unit 97 when executing the process of step S 140. The ECU 90 functions the shift signal prohibiting unit 98 when executing the shift signal prohibition control process in step S 150. Thus, the ECU 90 has the clutch signal supplying unit 92 for supplying an actuation signal to the clutch actuator 60, the clutch position detecting unit 94 for detecting a position of the clutch 44, the shift signal supplying unit 97 for supplying an actuation signal to the shift actuator 70, the determining unit 96 for determining the position of the clutch 44, and the shift signal prohibiting unit 98 for prohibiting the shift signal supplying unit 97 from supplying the actuation signal.

As described above, according to the present embodiment, after receiving the gear shifting command, the ECU 90 causes the clutch signal supplying unit 92 to supply an actuation signal to the clutch actuator 60 to start disengagement of the clutch 44. Then, at the time at which a predetermined time has elapsed, the ECU 90 detects the position of the clutch 44 using the clutch position detecting unit 94. The determining unit 96 of the ECU 90 determines whether or not the position of the clutch 44 detected by the clutch position detecting unit 94 is equal to or less than a threshold value. If the position of the clutch 44 is equal to or less than the threshold value, the shift signal prohibiting unit 98 of the ECU 90 executes a control process of prohibiting the supply of an actuation signal to the shift actuator 70. On the other hand, if the position of the clutch 44 is greater than the threshold value, the shift signal supplying unit 97 of the ECU 90 causes the gear position of the transmission mechanism 43 to change by supplying an actuation signal to the shift actuator 70. Thereby, it is possible to determine that an abnormality has occurred in the clutch system if the position of the clutch 44 is equal to or less than the threshold value at the time at which the predetermined time has elapsed since an actuation signal has been supplied to the clutch actuator 60 even though the clutch signal supplying unit 92 has supplied the actuation signal to the clutch actuator 60. In addition, the actuation signal is supplied to the shift actuator 70 at the time at which the predetermined time has elapsed. Therefore, the ECU 90 can prohibit the actuation of the shift actuator 70 before the actuation of the shift actuator 70. As a result, there is no risk of changing the gear position of the transmission mechanism 43 with the clutch 44 remaining engaged. Thus, it is possible to prevent the impairing of riding feel resulting from the gear shifting shock, which is caused by the changing of the gear position of the transmission mechanism 43 with the clutch 44 remaining engaged.

In the present embodiment, the predetermined time is set to be a shorter time than the time from when the clutch signal supplying unit 92 supplies the actuation signal to the clutch actuator 60 to when the disengagement of the clutch 44 is completed. This enables the determining unit 96 to determine the prohibiting of the actuation of the shift actuator 70 before the disengagement of the clutch 44 is completed. Therefore, it is possible to prohibit the actuation of the shift actuator 70 within a shorter time.

In the present embodiment, the automatic transmission apparatus 50 has an abnormality determining device for determining of an abnormality of the clutch system, including the clutch actuator 60, after the time at which the predetermined time has elapsed since the clutch signal supplying unit 92 has supplied the actuation signal to the clutch actuator 60. In this way, the determining of prohibiting the actuation of the shift actuator 70 is executed separately from the determining of an abnormality of the clutch system, and also the determining of prohibiting the actuation of the shift actuator 70 is executed before the determining of an abnormality of the clutch system. Therefore, the actuation of the shift actuator 70 can be prohibited within a short time. Moreover, since the automatic transmission apparatus 50 executes the determining of an abnormality of the clutch system after the predetermined time has elapsed, it is possible to ensure sufficient time for the determining of the abnormality. Therefore, the accuracy of the determining of an abnormality of the clutch system can be improved. As a result, both improvement in riding feel and accurate determining of an abnormality of the clutch system, including the clutch actuator 60, can be achieved at the same time.

In the present embodiment, if it is determined by the abnormality determining device that there is an abnormality in the clutch system, including the clutch actuator 60, the ECU 90 issues an alarm to notify the rider of the abnormality by the alarm device. This allows the rider to easily know that an abnormality has occurred in the clutch system.

In the present embodiment, the shift signal supplying unit 97 is configured to supply an actuation signal to the shift actuator 70 at the time at which the predetermined time has elapsed since the clutch signal supplying unit 92 has supplied the actuation signal to the clutch actuator 60. When the prohibiting of the actuation of the shift actuator 70 and the starting of the supply of the actuation signal to the shift actuator 70 are executed at the same time in this way, the time required for prohibiting the actuation of the shift actuator 70 can be ensured to the maximum. As a result, the accuracy of the determination for prohibiting the actuation of the shift actuator 70 can be improved.

In addition, the shift signal supplying unit 97 may be configured to supply the actuation signal to the shift actuator 70 after the time at which the predetermined time has elapsed since the clutch signal supplying unit 92 has supplied the actuation signal to the clutch actuator 60 and before the disengagement of the clutch 44 is completed. Thereby, the actuation signal can be supplied to the shift actuator 70 before the disengagement of the clutch is completed, and therefore, changing of the gear position of the transmission mechanism 43 can be made more quickly. As a result, the rider's idle running feeling can be reduced. In addition, the determining for prohibiting the actuation of the shift actuator 70 is executed before the actuation signal is supplied to the shift actuator 70. As a result, when an abnormality of the clutch system occurs, the actuation of the shift actuator 70 can be prohibited within a short time.

### < OTHER EMBODIMENTS >

In the foregoing embodiment, the gear shifting command is sent to the ECU 90 by the rider's manual operation of the shift-up switch 30a or the shift-down switch 30b of the shift switch 30. However, the ECU 90 may output a gear shifting command according to the driving condition of the motorcycle 1. Specifically, the ECU 90 outputs a gear shifting command by detecting, for example, the vehicle speed, the rotational speed of the engine 45, and/or the gear position of the transmission mechanism 43.

### REFERENCE SIGNS LIST

- 1: Motorcycle (straddle-type vehicle)
- 43: Transmission mechanism
- 44: Clutch
- 45: Engine
- 50: Automatic transmission apparatus
- 60: Clutch actuator
- 70: Shift actuator
- 90: ECU (control device)
- 92: Clutch signal supplying unit
- 94: Clutch position detecting unit
- 96: Determining unit
- 97: Shift signal supplying unit
- 98: Shift signal prohibiting unit

## Claims

1. An automatic transmission apparatus for a straddle-type vehicle (1) having an engine (45), a driving wheel (23), and a power transmission mechanism configured to transmit mechanical power of the engine (45) to the driving wheel (23), the automatic transmission apparatus comprising:
an electric throttle valve (65) provided in an air-intake passage of the engine (45);
a clutch (44), provided in the power transmission mechanism, and configured to transmit and to interrupt the mechanical power of the engine (45);
a clutch actuator (60) configured to drive the clutch (44);
a multi-geared type transmission mechanism (43), disposed between the clutch (44) in the power transmission mechanism (43) and the driving wheel (23), and having a dog clutch (44);
a shift actuator (70) configured to drive the transmission mechanism (43); and
a control device (90) configured to control the electric throttle valve (65) so as to increase or decrease an opening of the electric throttle valve (65) in gear-shifting, and to control the clutch actuator (60) and the shift actuator (70) so as to cause disengagement of the clutch (44), changing of a gear position of the transmission mechanism (43), and engagement of the clutch (44),
the control device (90) comprising:
a clutch signal supplying unit (92) configured to supply an actuation signal to the clutch actuator (60);
a clutch position detecting unit (94) configured to detect a position of the clutch (44);
a shift signal supplying unit (97) configured to supply an actuation signal to the shift actuator (70) at or after a time at which a predetermined time has elapsed since the clutch signal supplying unit (92) has supplied the actuation signal;
a determining unit (96) configured to acquire, from the clutch position detecting unit (94), a position of the clutch (44) at the time at which the predetermined time has elapsed since the clutch signal supplying unit (92) has supplied the actuation signal, and to determine whether or not the position of the clutch (44) is equal to or less than a threshold value; and
a shift signal prohibiting unit (98) configured to prohibit the shift signal supplying unit (97) from supplying the actuation signal if the determining unit (96) determines that the position of the clutch (44) is equal to or less than the threshold value at the time the predetermined time has elapsed.

2. The automatic transmission apparatus according to claim 1, wherein the predetermined time is set to be a shorter time than a time from when the clutch signal supplying unit (92) supplies the actuation signal to when the disengagement of the clutch (44) is completed.

3. The automatic transmission apparatus according to claim 2, further comprising an abnormality determining device configured to determine an abnormality of the clutch actuator (60) after the time at which the predetermined time has elapsed since the clutch signal supplying unit (92) has supplied the actuation signal.

4. The automatic transmission apparatus according to claim 3, further comprising an alarm device configured to provide an alarm if the abnormality determining device determines that the clutch actuator (60) has an abnormality.

5. The automatic transmission apparatus according to claim 1, wherein the shift signal supplying unit (97) is configured to supply the actuation signal to the shift actuator (70) after the time at which the predetermined time has elapsed since the clutch signal supplying unit (92) has supplied the actuation signal and before the disengagement of the clutch (44) is completed.

6. The automatic transmission apparatus according to claim 1, wherein the shift signal supplying unit (97) is configured to supply the actuation signal to the shift actuator (70) at the time at which the predetermined time has elapsed since the clutch signal supplying unit (92) has supplied the actuation signal.

7. A straddle-type vehicle comprising an automatic transmission apparatus according to claim 1.

## Patentansprüche

1. Eine Automatikgetriebevorrichtung für ein Fahrzeug vom rittlings zu fahrenden Typ (1), das einen Motor (45), ein Antriebsrad (23) und einen Leistungsübertragungsmechanismus, der dazu konfiguriert ist, mechanische Leistung des Motors (45) auf das Antriebsrad (23) zu übertragen, aufweist, wobei die Automatikgetriebevorrichtung folgende Merkmale aufweist:
ein elektrisches Drosselventil (65), das in einem Lufteinlasskanal des Motors (45) vorgesehen ist;
eine Kupplung (44), die in dem Leistungsübertragungsmechanismus vorgesehen und dazu konfiguriert ist, die mechanische Leistung des Motors (45) zu übertragen und zu unterbrechen;
ein Kupplungsbetätigungsglied (60), das dazu konfiguriert ist, die Kupplung (44) anzutreiben;
einen Getriebemechanismus vom Typ mehrerer Zahnräder (43), der zwischen der Kupplung (44) in dem Leistungsübertragungsmechanismus (43) und dem Antriebsrad (23) angeordnet ist und eine Klauenkupplung (44) aufweist;
ein Schaltbetätigungsglied (70), das dazu konfiguriert ist, den Übertragungsmechanismus (43) anzutreiben; und
eine Steuervorrichtung (90), die dazu konfiguriert ist, das elektrische Drosselventil (65) dahin gehend zu steuern, eine Öffnung des elektrischen Drosselventils (65) während eines Schaltvorgangs zu vergrößern oder zu verkleinern, und dazu, das Kupplungsbetätigungsglied (60) und das Schaltbetätigungsglied (70) dahin gehend zu steuern, ein Auskuppeln der Kupplung (44), einen Wechsel der Schaltstellung des Übertragungsmechanismus (43) sowie ein Einkuppeln der Kupplung (44) zu bewirken,
wobei die Steuervorrichtung (90) folgende Merkmale aufweist:
eine Kupplungssignalbereitstellungseinheit (92), die dazu konfiguriert ist, dem Kupplungsbetätigungsglied (60) ein Betätigungssignal bereitzustellen;
eine Kupplungspositionserfassungseinheit (94), die dazu konfiguriert ist, eine Position der Kupplung (44) zu erfassen;
eine Schaltsignalbereitstellungseinheit (97), die dazu konfiguriert ist, zu oder nach einem Zeitpunkt, zu dem eine vorbestimmte Zeit verstrichen ist, seit die Kupplungssignalbereitstellungseinheit (92) das Betätigungssignal bereitgestellt hat, dem Schaltbetätigungsglied (70) ein Betätigungssignal bereitzustellen;
eine Bestimmungseinheit (96), die dazu konfiguriert ist, von der Kupplungspositionserfassungseinheit (94) eine Position der Kupplung (44) zum Zeitpunkt, zu dem die vorbestimmte Zeit verstrichen ist, seit die Kupplungssignalbereitstellungseinheit (92) das Betätigungssignal bereitgestellt hat, zu erhalten und zu bestimmen, ob die Position der Kupplung (44) gleich einem oder geringer als ein Schwellwert ist; und
eine Schaltsignalhinderungseinheit (98), die dazu konfiguriert ist, die Schaltsignalbereitstellungseinheit (97) daran zu hindern, das Betätigungssignal bereitzustellen, falls die Bestimmungseinheit (96) bestimmt, dass die Position der Kupplung (44) zu dem Zeitpunkt, zu dem die vorbestimmte Zeit verstrichen ist, gleich dem oder geringer als der Schwellwert ist.

2. Die Automatikgetriebevorrichtung gemäß Anspruch 1, bei der die vorbestimmte Zeit so eingestellt ist, dass sie kürzer ist als eine Zeit, zu deren Beginn die Kupplungssignalbereitstellungseinheit (92) das Betätigungssignal bereitstellt und an deren Ende das Auskuppeln der Kupplung (44) abgeschlossen ist.

3. Die Automatikgetriebevorrichtung gemäß Anspruch 2, die ferner eine Anomaliebestimmungsvorrichtung aufweist, die dazu konfiguriert ist, eine Anomalie des Kupplungsbetätigungsglieds (60) nach dem Zeitpunkt, zu dem die vorbestimmte Zeit verstrichen ist, seit die Kupplungssignalbereitstellungseinheit (92) das Betätigungssignal bereitgestellt hat, zu bestimmen.

4. Die Automatikgetriebevorrichtung gemäß Anspruch 3, die ferner eine Alarmvorrichtung aufweist, die dazu konfiguriert ist, einen Alarm bereitzustellen, falls die Anomaliebestimmungsvorrichtung bestimmt, dass das Kupplungsbetätigungsglied (60) eine Anomalie aufweist.

5. Die Automatikgetriebevorrichtung gemäß Anspruch 1, bei der die Schaltsignalbereitstellungseinheit (97) dazu konfiguriert ist, nach dem Zeitpunkt, zu dem die vorbestimmte Zeit verstrichen ist, seit die Kupplungssignalbereitstellungseinheit (92) das Betätigungssignal bereitgestellt hat, und bevor das Auskuppeln der Kupplung (44) abgeschlossen ist, dem Schaltbetätigungsglied (70) das Betätigungssignal bereitzustellen.

6. Die Automatikgetriebevorrichtung gemäß Anspruch 1, bei der die Schaltsignalbereitstellungseinheit (97) dazu konfiguriert ist, zu dem Zeitpunkt, zu dem die vorbestimmte Zeit verstrichen ist, seit die Kupplungssignalbereitstellungseinheit (92) das Betätigungssignal bereitgestellt hat, dem Schaltbetätigungsglied (70) das Betätigungssignal bereitzustellen.

7. Ein Fahrzeug vom rittlings zu fahrenden Typ, das eine Automatikgetriebevorrichtung gemäß Anspruch 1 aufweist.

## Revendications

1. Appareil de transmission automatique pour un véhicule du type à selle (1) présentant un moteur (45), une roue d'entraînement (23), et un mécanisme de transmission d'énergie configuré pour transmettre une énergie mécanique du moteur (45) à la roue d'entraînement (23), l'appareil de transmission automatique comprenant:
une soupape d'étranglement électrique (65) prévue dans un passage d'admission d'air du moteur (45);
un embrayage (44), prévu dans le mécanisme de transmission d'énergie et configuré pour transmettre et pour interrompre l'énergie mécanique du moteur (45);
un actionneur d'embrayage (60) configuré pour entraîner l'embrayage (44);
un mécanisme de transmission de type à engrenages multiples (43) disposé entre l'embrayage (44) dans le mécanisme de transmission d'énergie (43) et la roue d'entraînement (23), et présentant un engrenage à crabots (44);
un actionneur de changement de vitesse (70) configuré pour entraîner le mécanisme de transmission (43); et
un dispositif de commande (90) configuré pour commander la soupape d'étranglement électrique (65) de manière à augmenter ou diminuer une ouverture de la soupape d'étranglement électrique (65) lors d'un changement de vitesse, et pour commander l'actionneur d'embrayage (60) et l'actionneur de changement de vitesse (70) de manière à provoquer le dégagement de l'embrayage (44), le changement de position d'engrenage du mécanisme de transmission (43), et l'engagement de l'embrayage (44),
le dispositif de commande (90) comprenant:
une unité de fourniture de signal d'embrayage (92) configurée pour fournir un signal d'actionnement à l'actionneur d'embrayage (60);
une unité de détection de position d'embrayage (94) configurée pour détecter une position de l'embrayage (44);
une unité de fourniture de signal de changement de vitesse (97) configurée pour fournir un signal d'actionnement à l'actionneur de changement de vitesse (70) à ou après un moment où un temps prédéterminé s'est écoulé depuis que l'unité de fourniture de signal d'embrayage (92) a fourni le signal d'actionnement;
une unité de détermination (96) configurée pour acquérir, de l'unité de détection de position d'embrayage (94), une position de l'embrayage (44) au moment où le temps prédéterminé s'est écoulé depuis que l'unité de fourniture de signal d'embrayage (92) a fourni le signal d'actionnement, et pour déterminer si la position de l'embrayage (44) est égale ou inférieure à une valeur de seuil; et
une unité d'interdiction de signal de changement de vitesse (98) configurée pour interdire que l'unité de fourniture de signal de changement de vitesse (97) fournisse le signal d'actionnement si l'unité de détermination (96) détermine que la position de l'embrayage (44) est égale ou inférieure à la valeur de seuil au moment où le temps prédéterminé s'est écoulé.

2. Appareil de transmission automatique selon la revendication 1, dans lequel le temps prédéterminé est réglé de manière à être un temps plus court qu'un temps entre le moment où l'unité de fourniture de signal d'embrayage (92) fournit le signal d'actionnement et le moment où le dégagement de l'embrayage (44) est terminé.

3. Appareil de transmission automatique selon la revendication 2, comprenant par ailleurs un dispositif de détermination d'anomalie configuré pour déterminer une anomalie de l'actionneur d'embrayage (60) après le moment où le temps prédéterminé s'est écoulé depuis que l'unité de fourniture de signal d'embrayage (92) a fourni le signal d'actionnement.

4. Appareil de transmission automatique selon la revendication 3, comprenant par ailleurs un dispositif d'alarme configuré pour fournir une alarme si le dispositif de détermination d'anomalie détermine que l'actionneur d'embrayage (60) présente une anomalie.

5. Appareil de transmission automatique selon la revendication 1, dans lequel l'unité de fourniture de signal de changement de vitesse (97) est configurée pour fournir le signal d'actionnement à l'actionneur de changement de vitesse (70) après le moment où le temps prédéterminé s'est écoulé depuis que l'unité de fourniture de signal d'embrayage (92) a fourni le signal d'actionnement et avant que le dégagement de l'embrayage (44) ne soit terminé.

6. Appareil de transmission automatique selon la revendication 1, dans lequel l'unité de fourniture de signal de changement de vitesse (97) est configurée pour fournir le signal d'actionnement à l'actionneur de changement de vitesse (70) au moment où le temps prédéterminé s'est écoulé depuis que l'unité de fourniture signal d'embrayage (92) a fourni le signal d'actionnement.

7. Véhicule du type à selle comprenant un appareil de transmission automatique selon la revendication 1.
